# EUROPEAN PATENT APPLICATION

(11) **EP 4 827 029 A1**
(43) Date of publication of application: **21.10.2026**
(21) Application number: 23961162.7
(22) Date of filing: 14.12.2023
(51) Int. Cl.: H04L 5/00, H04W 72/232

(54) **DATA TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); ZHANG, Yi, Dongguan, Guangdong 523860 (CN)
(74) Representative: Novagraaf Technologies
(86) International application number: PCT/CN2023/138932
(87) International publication number: WO 2025/123302

(57) **Abstract**

A data transmission method and apparatus, and a device and a storage medium, which relate to the technical field of communications. The method comprises: a terminal device receiving data, wherein the data comprises C parts, the number of bits in each of the C parts is determined on the basis of the number of bits in at least one piece of downlink control information, and C is a positive integer (410). For a scenario in which a downlink channel supports carrying data information and control information, e.g., a scenario in which downlink data is carried in a downlink control channel for transmission, when a terminal device performs blind detection on the downlink channel (e.g., the downlink control channel), the number of instances of blind detection is directly proportional to the number of information types to be subjected to detection (different information types corresponding to different numbers of bits), and therefore no new number of bits is introduced into the transmitted data by means of determining the number of bits in each part of the downlink data on the basis of the number of bits in the downlink control information, and thus an increase in the number of instances of blind detection can be avoided.

## Description

### TECHNICAL FIELD

The embodiments of the present disclosure relate to the field of communication technology, and in particular, to a method and apparatus for transmitting data, and a device and a storage medium thereof.

### RELATED ART

For downlink data transmission, the communication system generally supports the following two methods: 1. dynamic scheduling; 2. semi-persistent scheduling (SPS).

With the development of communication technology, for example, in some services of 6th generation mobile communication technology (6G), the amount of data transmitted in a single transmission is not large. When using the existing dynamic scheduling for small data or small packet, the overhead of downlink control information (DCI) is relatively high, resulting in low system efficiency. Furthermore, it requires the completion of downlink control channel demodulation and data channel demodulation before completing data demodulation, making it impossible to further reduce latency. Therefore, in the design of future communication systems, direct transmission of smaller data packets using control channels can be considered.

In the aforementioned scenario, further research is needed for downlink data transmission.

### SUMMARY

The embodiments of the present disclosure provide a method and apparatus for transmitting data, a device and a storage medium thereof. The technical solutions according to the embodiments of the present disclosure are as follows.

According to an aspect of the embodiments of the present disclosure, a method for transmitting data is provided, which is performed by a terminal device, and the method includes:
receiving data, wherein the data includes C parts, and a number of bits of each of the C parts is determined based on a number of bits of at least one type of downlink control information, C being a positive integer.

According to an aspect of the embodiments of the present disclosure, a method for transmitting data is provided, which is performed by a network device, and the method includes:
transmitting data, wherein the data includes C parts, and a number of bits of each of the C parts is determined based on a number of bits of at least one type of downlink control information, C being a positive integer.

According to an aspect of the embodiments of the present disclosure, an apparatus for transmitting data is provided, which includes:
a receiving module, configured to receive data, wherein the data includes C parts, and a number of bits of each of the C parts is determined based on a number of bits of at least one type of downlink control information, C being a positive integer.

According to an aspect of the embodiments of the present disclosure, an apparatus for transmitting data is provided, which includes:
a transmitting module, configured to transmit data, wherein the data includes C parts, and a number of bits of each of the C parts is determined based on a number of bits of at least one type of downlink control information, C being a positive integer.

According to an aspect of the embodiments of the present disclosure, a communication device is provided, which includes a processor and a memory. The memory stores a computer program that, when executed by the processor, causes the processor to perform the method for transmitting data on the terminal device side described above, or to perform the method for transmitting data on the network device side described above.

According to an aspect of the embodiments of the present disclosure, a computer-readable storage medium is provided, in which a computer program is stored. The computer program, when executed by a processor, causes the processor to perform the method for transmitting data on the terminal device side as described above, or to perform the method for transmitting data on the network device side as described above.

According to an aspect of the embodiments of the present disclosure, a computer program product is provided, which includes one or more computer instructions stored in a computer-readable storage medium. The one or more computer instructions, when read from the computer-readable storage medium and executed by a processor, cause the processor to perform the method for transmitting data on the terminal device side as described above, or to perform the method for transmitting data on the network device side as described above.

The technical solution according to the embodiments of the present disclosure may include the following beneficial effects.

For scenarios where the downlink channel supports carrying of both data information and control information (such as scenarios where downlink data is carried in the downlink control channel for transmission), the number of bits of each part of the downlink data is determined based on the number of bits of the downlink control information, causing no new bits to be introduced by the transmitted data. This can avoid an increase in the number of blind detections since the number of blind detections, when performed by the terminal device for the downlink channel (such as the downlink control channel), is proportional to the number of types of information to be detected, wherein different types of information correspond to different numbers of bits.

### BRIEF DESCRIPTION OF DRAWINGS

FIG. 1 is a schematic diagram of the architecture of a communication system according to some embodiments of the present disclosure.
FIG. 2 is a schematic diagram of the architecture of another communication system according to some embodiments of the present disclosure.
FIG. 3 is a schematic diagram of the architecture of another communication system according to some embodiments of the present disclosure.
FIG. 4 is a flowchart of a method for transmitting data according to an embodiment of the present disclosure.
FIG. 5 is a schematic diagram of a data segmentation result according to an embodiment of the present disclosure.
FIG. 6 is a schematic diagram of a data segmentation result according to another embodiment of the present disclosure.
FIG. 7 is a schematic diagram of a data segmentation result according to another embodiment of the present disclosure.
FIG. 8 is a schematic diagram of a data segmentation result according to another embodiment of the present disclosure.
FIG. 9 is a schematic diagram of a data segmentation result according to another embodiment of the present disclosure.
FIG. 10 is a flowchart of a method for transmitting data according to another embodiment of the present disclosure.
FIG. 11 is a block diagram of an apparatus for transmitting data according to an embodiment of the present disclosure.
FIG. 12 is a block diagram of an apparatus for transmitting data according to another embodiment of the present disclosure.
FIG. 13 is a structural schematic diagram of a terminal device according to an embodiment of the present disclosure.
FIG. 14 is a structural schematic diagram of a network device according to an embodiment of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

The technical solutions according to the embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5-th generation (5G) system, a 6-th generation (6G) system, or another communication system.

Generally, a conventional communication system supports a limited quantity of connections and is easy to implement. However, with development of communication technologies, a mobile communication system supports not only conventional communication modes, but also other communication modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum.

The embodiments of the present disclosure may be applicable to both a non-terrestrial network (NTN) system and a terrestrial network (TN) system. The NTN system generally adopts satellite communication to provide communication services to ground users. Currently, NTN systems include NR-NTN and Internet of things (IoT)-NTN systems, and may subsequently include other NTN systems.

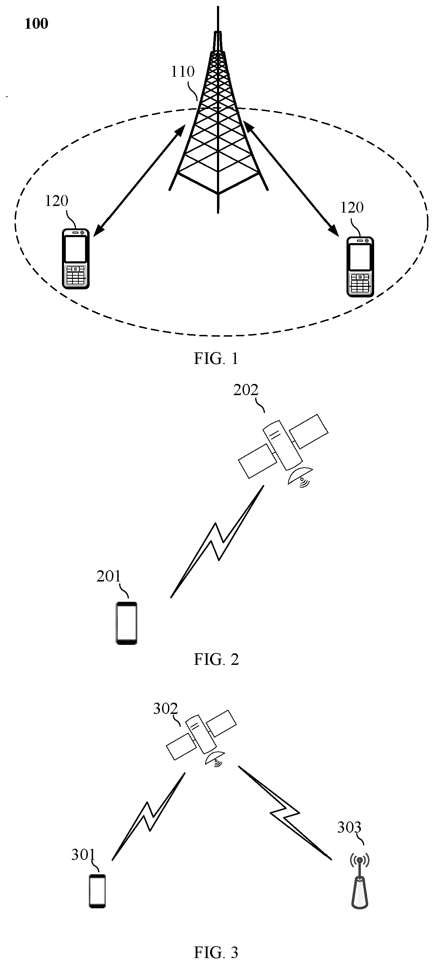

Illustratively, FIG. 1 is a schematic diagram of the architecture of a communication system provided by the present disclosure. As shown in FIG. 1, the communication system 100 may include a network device 110, which may be a device that communicates with a terminal device 120. The network device 110 may provide communication coverage for a specific geographical area and may communicate with terminal devices located within that coverage area.

FIG. 1 exemplarily illustrates one network device 110 and two terminal devices 120. In some embodiments of the present disclosure, the communication system 100 may include a plurality of network devices, and each network device may have a coverage area that includes a different number of terminal devices. This is not limited in the embodiments of the present disclosure.

Illustratively, FIG. 2 is a schematic diagram of the architecture of another communication system according to some embodiments of the present disclosure. Referring to FIG. 2, the communication system may include a terminal device 201 and a satellite 202, which can perform wireless communication with each other. The network formed between the terminal device 201 and the satellite 202 may also be referred to as the NTN. In the architecture of the communication system shown in FIG. 2, the satellite 202 can function as a base station, and direct communication can be performed between the terminal device 201 and the satellite 202. Under this system architecture, the satellite 202 may be referred to as a network device. In some embodiments of the present disclosure, the communication system may include a plurality of satellites 202, and each network satellite 202 may have a coverage area that includes a different number of terminal devices. This is not limited in the embodiments of the present disclosure.

Illustratively, FIG. 3 is a schematic diagram of the architecture of another communication system according to some embodiments of the present disclosure. Referring to FIG. 3, the communication system includes a terminal device 301, a satellite 302, and a base station 303. Wireless communication can be performed between the terminal device 301 and the satellite 302, and communication can be performed between the satellite 302 and the base station 303. The network formed among the terminal device 301, the satellite 302, and the base station 303 may also be referred to as the NTN. In the architecture of the communication system shown in FIG. 3, the satellite 302 may not have the function of a base station, and communication between the terminal device 301 and the base station 303 needs to be relayed by the satellite 302. Under this system architecture, the base station 303 may be referred to as a network device. In some embodiments of the present disclosure, the communication system may include a plurality of base stations 303, each of which can communicate with one or more satellites 302, and each satellite 302 may have a coverage area that includes a different number of terminal devices. This is not limited in the embodiments of the present disclosure.

In future evolved communication systems such as a beyond 5G (B5G) system or a 6G system, scenarios involves distributed multiple-input multiple-output (MIMO) (also known as a distributed antenna system) and/or massive MIMO (also known as a massive antenna matrix system) may further be included. In some cases, distributed MIMO and/or massive MIMO may also support cell-free or user equipment (UE)-centric networking scenarios. It should be understood that the aforementioned scenarios are also applicable to the TN and/or the NTN.

The terminal device mentioned in the embodiments of the present disclosure may refer to a UE, an access terminal, a user unit, a user station, a mobile station, a remote station, a remote terminal, a mobile device, a wireless communication device, a user agent, or a user device. Optionally, the terminal device 10 may also be a cellular phone, a cordless phone, a Session Initiation Protocol (SIP) phone, a wireless local loop (WLL) station, a personal digital assistant (PDA), a handheld device with wireless communication function, a computing device, or another processing device connected to a wireless modem, an in-vehicle device, a wearable device, a terminal device in a 5-th generation system (5G), a terminal device in a future-evolved public land mobile network (PLMN), etc. The embodiments of the present disclosure are not limited thereto. For ease of description, the aforementioned devices are collectively referred to as terminal devices. In the embodiments of the present disclosure, "terminal device" and "UE" are typically used interchangeably, but those skilled in the art may understand that they can convey the same meaning.

The network device mentioned in the embodiments of the present disclosure may be an access network device, which may be located on the ground or on a satellite. An access network device is a device deployed in the access network to provide wireless communication functions for terminal devices. Access network devices may include various forms of macro base stations, micro base stations, relay stations, access points, and so on. In systems using different radio access technologies, the names of devices with access network device functions may vary. For example, in a 5G NR system, such a device is referred to as a gNodeB or gNB. As communication technology evolves, the name "access network device" may change. For ease of description, in the embodiments of the present disclosure, the aforementioned devices that provide wireless communication functions for terminal devices are collectively referred to as access network devices. Optionally, a communication relationship can be established between the terminal device and the core network device via the access network device.

The "5G NR system" in the embodiments of the present disclosure may also be referred to as a 5G system or an NR system, but those skilled in the art can understand its meaning. The technical solutions described in the embodiments of the present disclosure are applicable to LTE systems, 5G NR systems, subsequent evolution systems of 5G NR systems (such as B5G systems, 6G systems), and other communication systems such as narrow band (NB)-IoT systems. This is not limited by the present disclosure.

In the embodiments of the present disclosure, the network device can provide services to a cell. The terminal device communicates with the network device through transmission resources (such as frequency domain resources, or spectrum resources) on the carrier used by the cell. The cell may be the one corresponding to the network device (such as a base station). The cell may belong to a macro base station or a base station corresponding to a small cell. Here, the small cell may include a metro cell, a micro cell, a pico cell, a femto cell, etc. These small cells are characterized by small coverage and low transmission power, and are suitable for providing high-rate data transmission services.

For downlink data transmission, the communication system typically supports the following two methods: 1. dynamic scheduling; 2. SPS.

### 1. Dynamic scheduling

Dynamic scheduling refers to the method by which network devices schedule downlink data transmission via downlink control signaling (e.g., DCI). Terminal devices receive the downlink control signaling transmitted by the network device and then receive downlink data based on the parameters in the downlink control signaling. The advantage of dynamic scheduling lies in the fact that the scheduler determines transmission parameters based on real-time traffic volume and physical channel conditions, resulting in high transmission efficiency. However, terminal devices perform blind detection on the downlink control signaling, which increases the complexity of reception.

### 2. SPS

SPS refers to the method by which network devices schedule downlink data transmission via higher-layer signaling (such as radio resource control (RRC) signaling). Terminal devices receive higher-layer signaling (such as RRC signaling) transmitted by network devices and receive downlink data based on the parameters in the higher-layer signaling. For scenarios where data arrives periodically with a constant traffic volume and the transmission conditions are stable (e.g., the terminal device does not move rapidly), using semi-persistent scheduling can reduce the overhead of downlink control signaling in the system and simplify the receiving processing at the receiving end.

In the NR system, the physical downlink control channel (PDCCH) carries the DCI transmitted from network devices to terminal devices. The DCI is the downlink control signaling mentioned above. The DCIs for different terminal devices are multiplexed and transmitted on the PDCCH. The terminal device needs to perform blind detection on the PDCCH to determine whether there is a DCI addressed to itself in the current PDCCH.

The NR PDCCH can support a plurality of DCI formats and aggregation level sizes. Different DCI formats essentially correspond to different payload sizes. Different aggregation levels essentially indicate different amounts of physical resources occupied by the DCI. The number of DCI formats and aggregation levels to be detected may affect the number of blind detections performed by the terminal device. The more blind detections the terminal device performs, the greater its power consumption and the longer its reception delay.

The NR DCI employs polar coding, and the length of information bits supported by polar codes is limited by the interleaving matrix in the encoder. In the NR system, an interleaving matrix with a maximum interleaving length of 164 bits is designed. That is, in the NR system, the total number of DCI bits and cyclic redundancy check (CRC) bits transmitted in the PDCCH does not exceed 164 bits. After removing the 24-bit CRC, the information bits of DCI shall not exceed 140 bits.

For certain services, the amount of data transmitted in a single transmission is not large. When using the existing dynamic scheduling for small data or small packet, the overhead of the DCI is relatively high, resulting in low system efficiency. Furthermore, it requires the completion of downlink control channel demodulation and data channel demodulation before completing data demodulation, making it impossible to further reduce latency. Therefore, in the design of future communication systems, direct transmission of smaller data packets using control channels can be considered. Taking the NR control channel design as an example, if the data is limited to 140 bits, the actual available scenarios may be reduced. To appropriately expand the application scenarios of this scheme, the present disclosure proposes a segmentation method of data for transmission.

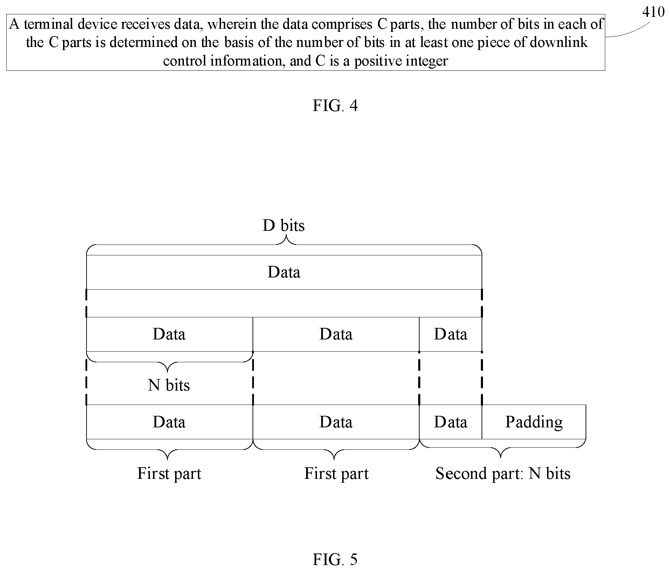

Referring to FIG. 4, it illustrates a flowchart of a method for transmitting data according to an embodiment of the present disclosure. The method may include the following steps.

In step 410, a terminal device receives data, wherein the data includes C parts, and a number of bits of each of the C parts is determined based on a number of bits of at least one type of downlink control information, C being a positive integer.

In some embodiments, the data received by the terminal device originates from the network device, meaning that the data received by the terminal device is transmitted by the network device. The terminal device receives data transmitted by the network device. Since the transmission link from the network device to the terminal device is generally referred to as the downlink, the data transmitted by the network device to the terminal device is generally referred to as downlink data.

In some embodiments, the aforementioned data is in the form of a transport block (TB). The terminal device receives the TB, which includes C parts. In some other embodiments, the data may also be represented in the form of a protocol data unit (PDU), a packet, etc. The present disclosure does not impose any limitations in this regard.

In some embodiments, the data includes C parts, wherein C may be 1 or an integer greater than 1. When C is an integer greater than 1, the data including C parts may be understood as the data being segmented into C parts.

Generally, the information transmitted between terminal devices and network devices may be divided into two types: data information and control information. The data information may be represented in the form of TBs, PDUs, packets, etc. The control information may be represented in the form of downlink control information (e.g., DCI), uplink control information (UCI), configuration information, grant information, etc. The control information may also be referred to as signaling information. Generally, compared to the data information, the control information has a smaller number of bits.

In some embodiments, the aforementioned data is carried in a first channel for transmission, wherein the first channel is used for transmitting at least one type of downlink control information. The data includes C parts, and a number of bits of each of the C parts is determined based on a number of bits of the aforementioned at least one type of downlink control information.

It can be understood that the first channel has the function of transmitting the aforementioned at least one type of downlink control information. By extending the function of the first channel, the first channel is enabled to have the function of transmitting data in addition to the function of transmitting downlink control information. In this way, data can be carried in the first channel for transmission.

In some embodiments, the first channel is a control channel, and the aforementioned data is carried in the control channel for transmission. This control channel may be a control channel used for downlink transmission, which supports carrying downlink control information and may be referred to as a downlink control channel. In some embodiments, the control channel is a PDCCH, which supports carrying the downlink control information. The downlink control information refers to the control information transmitted by network devices to terminal devices. With the evolution of communication technology, the name of the downlink control channel may change, such as no longer being referred to as a PDCCH but as another name. This is not limited by the present disclosure.

By transmitting downlink data over the control channel (which may be, but is not limited to, a PDCCH), the characteristics of the control channel can be fully utilized, such as the use of spreading, the adoption of polar codes or channel coding schemes for small block lengths, or other characteristics. For downlink data transmission, the use of spreading can enhance multi-user multiplexing capability and improve the transmission efficiency of downlink data. Additionally, adopting polar codes or channel coding schemes for small block lengths has advantages over low density parity check code (LDPC) coding for encoding small packets.

In some embodiments, the first channel is an extension or enhancement of the data channel, which not only supports carrying data information but also extends or enhances the capability of carrying control information. In some embodiments, the first channel is a data channel with a first characteristic. The first characteristic may be a characteristic possessed by a control channel. In some embodiments, the first channel is a physical downlink shared channel (PDSCH) with a first characteristic, or referred to as an extended or enhanced PDSCH (e.g., a PDSCH with spreading). In some embodiments, the first characteristic includes at least one of: the use of spreading, or the adoption of polar codes or channel coding schemes for small block lengths.

In some embodiments, the first channel is a newly defined channel in a standard or protocol, which has the capability of supporting carrying data information and control information, and possesses the aforementioned first characteristic. The name of this first channel is not limited in the present disclosure.

By expanding or enhancing the data channel (which may be, but is not limited to, a PDSCH), the data channel is enabled to possess the characteristics possessed by the control channel (which may be, but is not limited to, a PDCCH), such as the use of spreading, the adoption of polar codes or channel coding schemes with small block lengths, thereby contributing to the improvement of transmission efficiency of downlink data.

It should be understood that the downlink control information may have different types. The aforementioned at least one type of downlink control information may include only one type of downlink control information, or may include a plurality of types of downlink control information. The types of downlink control information may be distinguished using downlink control information formats. Taking the DCI as an example, the DCI has different formats, such as DCI format_0, DCI format_1A, DCI format_1B, DCI format_1C, DCI format_1D, DCI format_2A, DCI format_2B, DCI format_2C, DCI format_3, DCI format_4, etc. Different DCI formats have different functions and are used to carry different information. Different DCI formats may be understood as different types of DCI.

When the terminal device receives the first channel using blind detection, the number of blind detections is proportional to the number of types of information to be detected, wherein different types of information correspond to different numbers of bits. Therefore, in the embodiments of the present disclosure, the number of bits of each part of the downlink data is determined based on the number of bits of the downlink control information, such that no new bits are introduced by the transmitted data, thereby avoiding an increase in the number of blind detections. Taking the first channel being a downlink control channel as an example, in the present disclosure, the downlink data is carried in the downlink control channel for transmission; when the terminal device performs blind detection on the downlink control channel, the number of blind detections is proportional to the number of DCI formats to be detected, wherein different DCI formats correspond to different numbers of bits. Therefore, the number of bits of each part of the downlink data is determined based on the number of bits of the downlink control information, causing no new bits to be introduced by the transmitted data, thereby avoiding an increase in the number of blind detections.

In some embodiments, a number of bits of the aforementioned data allowed to be carried in the first channel for transmission is less than or equal to a first threshold, which is specified by a protocol, configured by a network device, or associated with the capabilities of the terminal device. For example, the first threshold is set for a transport block size (TBS), and may be understood as an upper limit of the TBS of the data allowed to be carried in the first channel for transmission.

In some embodiments, a total number of parts included in the aforementioned data allowed to be carried in the first channel for transmission is less than or equal to a second threshold, which is specified by a protocol, configured by a network device, or associated with the capabilities of the terminal device.

As introduced above, the first channel may be a control channel, an extended or enhanced data channel, or a newly defined channel in a standard or protocol. The present disclosure does not impose any limitations in this regard.

By constraining the number of bits of the aforementioned data or the total number of parts included in the aforementioned data, and limiting them to not be excessively large, congestion on the first channel can be avoided, that is, preventing a single TB, PDU, or packet from occupying a significant amount of channel resources for transmission.

The number of bits of each of the C parts mentioned above is explained hereinafter.

Case 1: Each of the C parts has the same number of bits.

In some embodiments, the number of bits of each of the C parts is N, wherein N is determined based on the number of bits of the aforementioned at least one type of downlink control information, and N is a positive integer. In this case, each of the C parts has the same number of bits which is equal to N, and N is determined based on the number of bits of the aforementioned at least one type of downlink control information.

In some embodiments, the value of C is determined based on the value of N. In other embodiments, the value of C is determined based on the number of bits of the aforementioned data and the value of N. Assuming that the number of bits of the aforementioned data is D (which is a positive integer), the value of C may be equal to $\left⌈\frac{D}{N}\right⌉$, wherein $\left⌈\frac{D}{N}\right⌉$ represents rounding up $\frac{D}{N}$ to an integer.

In some embodiments, the value of C is configured by the network device.

In some embodiments, the C parts include at least one first part and/or at least one second part. The first part includes N bits of data information. The second part includes (N-P) bits of data information and P bits of padding information, wherein P is a positive integer not greater than N.

In some embodiments, each of the aforementioned C parts is a first part, meaning that each part includes N bits of data information. In this case, the number of bits D of the aforementioned data may be exactly divisible by the number of bits N of each part. For example, the number of bits D of the aforementioned data is 100 and the number of bits N of each part is 20, then the data may be segmented into 5 parts, with each part including 20 bits of data information.

In some embodiments, the aforementioned C parts include at least one first part and at least one second part, wherein each first part includes N bits of data information, and each second part includes (N-P) bits of data information and P bits of padding information. In this case, the number of bits D of the aforementioned data is not divisible by the number of bits N of each part. For example, if the number of bits D of the aforementioned data is 110 and the number of bits N of each part is 20, the aforementioned data can be segmented into 6 parts, including 5 first parts and 1 second part. Each first part includes 20 bits of data information, and the second part may include 10 bits of data information and 10 bits of padding information.

In some embodiments, each of the aforementioned C parts is a second part, meaning that each part includes (N-P) bits of data information and P bits of padding information. In this case, the number of bits D of the aforementioned data is not divisible by the number of bits N of each part. For example, if the number of bits D of the aforementioned data is 90 and the number of bits N of each part is 20, the aforementioned data may be segmented into 5 parts, with each part including 18 bits of data information and 2 bits of padding information.

It should be noted that in the case where the C parts include a plurality of second parts, the number of bits P of the padding information included in each second part may be the same or different. For example, if the number of bits D of the aforementioned data is 90 and the number of bits N of each part is 20, the aforementioned data may be segmented into 5 parts, with each part including 18 bits of data information and 2 bits of padding information. In this case, the number of bits P of the padding information included in each part is the same, which is 2. Another example is that if the number of bits D of the aforementioned data is 110 and the number of bits N of each part is 20, the aforementioned data may be segmented into 6 parts, with 4 parts each including 18 bits of data information and 2 bits of padding information, and the other 2 parts each including 19 bits of data information and 1 bit of padding information. In this case, the number of bits P of the padding information included in each part varies, with some being 2 and some being 1.

In some embodiments, the value of P corresponding to the second part is equal to (C*N-D), wherein D represents the number of bits of the data. For example, if the number of bits D of the aforementioned data is 90 and the number of bits N of each part is 20, the aforementioned data may be segmented into C = 5 parts, and the value of P corresponding to the second part is equal to 10, meaning that the second part includes 10 bits of data information and 10 bits of padding information.

In some embodiments, the aforementioned C parts include (C-1) first parts and 1 second part, and the value of P corresponding to the second part is equal to (C*N-D).

As shown in FIG. 5, the aforementioned C parts include (C-1) first parts and 1 second part. Each first part includes N bits of data information, while the second part includes (N-P) bits of data information and P bits of padding information, wherein P equals (C*N-D). For example, if the number of bits D of the aforementioned data is 90 and the number of bits N of each part is 20, the aforementioned data may be segmented into C = 5 parts, including 4 first parts and 1 second part. Each first part includes 20 bits of data information, while the second part includes 10 bits of data information and 10 bits of padding information. This method is relatively simple to implement.

In some embodiments, the value of P corresponding to the second part is equal to $\left(N-\left⌈\frac{D}{C}\right⌉\right)$ or equal to $\left(N-\left⌊\frac{D}{C}\right⌋\right)$, wherein D represents the number of bits of the data. For example, if the number of bits D of the aforementioned data is 92 and the number of bits N of each part is 20, the aforementioned data may be segmented into C = 5 parts, wherein the value of P corresponding to the second part is equal to 1 or 2.

In some embodiments, the aforementioned C parts include mod(D,C) first-type second parts, wherein the value of P corresponding to the first-type second part is equal to $\left(N-\left⌈\frac{D}{C}\right⌉\right)$; and/or, the aforementioned C parts include (C-mod(D,C)) second-type second parts, wherein the value of P corresponding to the second-type second part is equal to $\left(N-\left⌊\frac{D}{C}\right⌋\right)$. Here, mod(D,C) represents a modulo operation, that is, the remainder obtained by dividing D by C, $\left⌈\frac{D}{C}\right⌉$ represents rounding up $\frac{D}{C}$ to an integer, and $\left⌊\frac{D}{C}\right⌋$ represents rounding down $\frac{D}{C}$ to an integer.

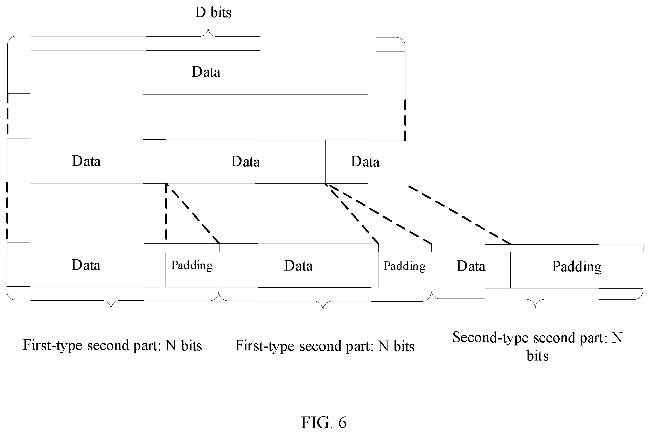

As shown in FIG. 6, the aforementioned C parts include mod(D,C) first-type second parts and (C - mod(D,C)) second-type second parts. For example, if the number of bits D of the aforementioned data is 92 and the number of bits N of each part is 20, the aforementioned data may be segmented into C = 5 parts, including 2 first-type second parts and 3 second-type second parts. Each first-type second part includes 19 bits of data information and 1 bit of padding information. Each second-type second part includes 18 bits of data information and 2 bits of padding information. This approach enables the number of bits of effective information (i.e., data information) included in each part to be as close as possible, ensuring similar transmission performance across all parts.

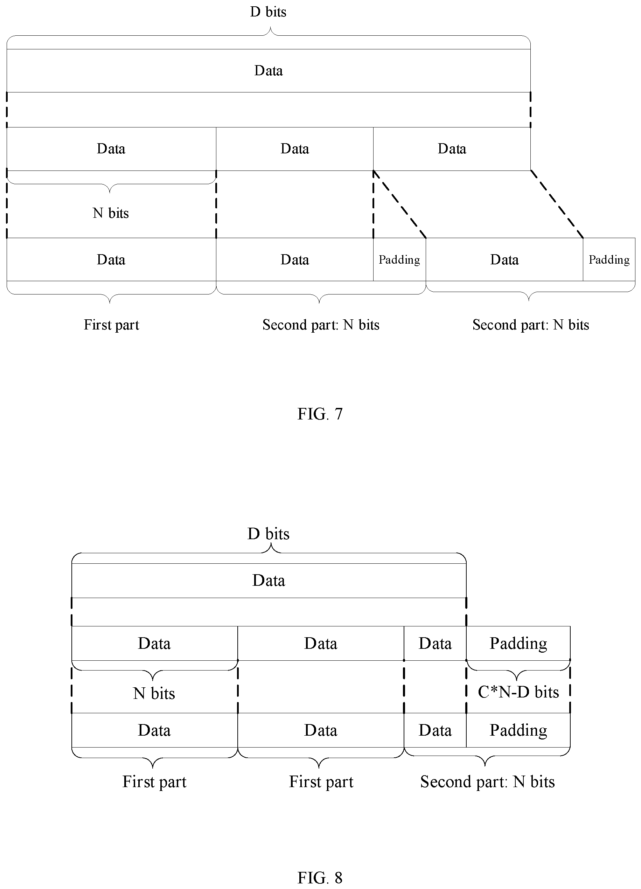

It should be noted that in some cases, the value of $\left⌈\frac{D}{C}\right⌉$ may be equal to N. In this case, the value of P corresponding to the first-type second part is 0. The first-type second part includes N bits of data information and 0 bits of padding information, which is equivalent to the first part mentioned above, as shown in FIG. 7. For example, if the number of bits D of the aforementioned data is 96 and the number of bits N of each part is 20, the aforementioned data may be segmented into C = 5 parts, including 1 first-type second part and 4 second-type second parts. Each first-type second part includes 20 bits of data information. Each second-type second part includes 19 bits of data information and 1 bit of padding information.

In some embodiments, for the case where the C parts include (C-1) first parts and 1 second part, as shown in FIG. 8, (C*N-D) bits of padding information may be padded to D bits of data. Then, the aforementioned C*N bits of information (including D bits of data and (C*N-D) bits of padding information) may be segmented into C parts, with each part including N bits. Among these C parts, there are (C-1) first parts and 1 second part. Each first part includes N bits of data information, while the second part includes (N-P) bits of data information and P bits of padding information, wherein P equals (C*N-D).

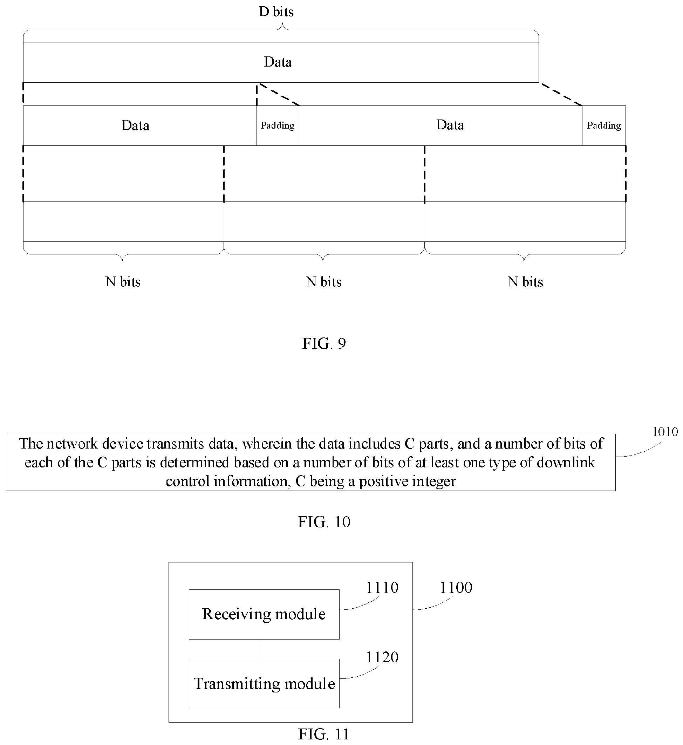

In some embodiments, for the case where the C parts include mod(D,C) first-type second parts and (C-mod(D,C)) second-type second parts, as shown in FIG. 9, firstly, (C*N-D) bits of padding information are padded dispersedly throughout the D bits of data. Then, the aforementioned C*N bits of information (including D bits of data and (C*N-D) bits of padding information) are segmented into C parts, with each part including N bits. Furthermore, each part may include a certain number of padding information. Specifically, whether each part includes the padding information and the number of bits of the padding information included are determined by the position where the aforementioned (C*N-D) bits of padding information are padded to the D bits of data.

In some embodiments, the aforementioned at least one type of downlink control information includes first downlink control information, wherein the first downlink control information is one of M types of downlink control information that are pre-configured, M being a positive integer. In this case, N is determined based on the number of bits of the at least one type of downlink control information, including that: N is determined based on the number of bits of the first downlink control information.

In some embodiments, the first downlink control information is downlink control information with a largest number of bits among the aforementioned M types of downlink control information. In this case, the number of bits of each part is relatively large, which can minimize the number of parts obtained by segmenting the data as much as possible.

In some embodiments, the first downlink control information is downlink control information with a smallest number of bits among the aforementioned M types of downlink control information. In this case, the number of bits of each part is relatively small, and the independent reliability of each part is relatively high, which is conducive to utilizing scattered physical resources to transmit each part, thereby improving system efficiency.

In some embodiments, the first downlink control information is configured by the network device. In this case, the network device determines one type of downlink control information from the pre-configured M types of downlink control information as the first downlink control information and configures it to the terminal device, providing high flexibility in configuration.

In some embodiments, N equals the number of bits of the first downlink control information. For example, if the number of bits of the first downlink control information is L (which is a positive integer), N = L. In this case, for each part, its number of bits N is equal to the number of bits L of a certain type of downlink control information.

In some embodiments, N equals the number of bits of the first downlink control information minus a first value, wherein the first value is specified by a protocol or configured by a network device. For example, if the number of bits of the first downlink control information is L and the first value is S (wherein L is a positive integer and S is also a positive integer), N = (L-S). In this case, for each part, its number of bits N is smaller than the number of bits L of a certain type of downlink control information, but each part is transmitted together with first information having a number of bits S. After attaching the first information to each part, the total number of bits transmitted together is L. For an introduction to the first information, reference may be made to the following description.

Case 2: The number of bits of each of the C parts varies.

In some embodiments, the aforementioned C parts include at least one third part and at least one fourth part, wherein the number of bits of the third part is different from the number of bits of the fourth part.

In some embodiments, the aforementioned C parts include (C-1) third parts and 1 fourth part. That is, the number of the third parts may be greater than or equal to the number of the fourth parts. For example, when C is equal to 2, the aforementioned C parts include one third part and one fourth part. For another example, when C is equal to 3, the aforementioned C parts include two third parts and one fourth part.

In some embodiments, the terminal device is configured to monitor K types of downlink control information, wherein K is an integer greater than or equal to 2. The at least one type of the downlink control information includes second downlink control information and third downlink control information, which are two different types of downlink control information configured for the terminal device to monitor. The number of bits of the third part is determined based on the number of bits of the second downlink control information. The number of bits of the fourth part is determined based on the number of bits of the third downlink control information. For example, the terminal device is configured to monitor 3 types of downlink control information, namely, downlink control information in format 0, downlink control information in format 1, and downlink control information in format 3. The number of bits of the third part is determined based on the number of bits of the downlink control information in format 0, and the number of bits of the fourth part is determined based on the number of bits of the downlink control information in format 1.

In some embodiments, the second downlink control information is downlink control information with a largest number of bits among the aforementioned K types of downlink control information or configured by the network device. As previously mentioned, the number of bits of the third part is determined based on the number of bits of the second downlink control information. Considering that the second downlink control information mentioned here is the downlink control information with the largest number of bits among the aforementioned K types of downlink control information, the number of bits of each third part can be made larger, thereby minimizing the number of parts obtained by segmenting the data as much as possible.

In some embodiments, the value of C is determined based on the number of bits of the second downlink control information. For example, $C = \left⌈\frac{D}{N 1}\right⌉$, wherein D represents the number of bits of the aforementioned data, N1 is determined based on the number of bits of the second downlink control information, and $\left⌈\frac{D}{N 1}\right⌉$ represents rounding up $\frac{D}{N}$ to an integer. For instance, assuming D = 100 and N1 = 30, C = 4.

In some embodiments, the value of C is configured by the network device. In this case, the value of C is configured by the network device, which provides high configuration flexibility. Moreover, the network device can reasonably configure the value of C based on the number of bits of the aforementioned data to be transmitted, thereby minimizing padding information and facilitating system efficiency improvement.

In some embodiments, the third downlink control information is downlink control information with a smallest number of bits among one or more pieces of downlink control information, of the aforementioned K types of downlink control information, that have a number of bits greater than or equal to a second value. The second value is equal to (D-(C-1)×N1), wherein D represents the number of bits of the aforementioned data, and N1 is determined based on the number of bits of the second downlink control information. On the one hand, ensuring that the number of bits of the third downlink control information is greater than the second value aims to guarantee that the fourth part can accommodate the remaining data information not included in the third part of the aforementioned data. On the other hand, selecting the downlink control information with the smallest number of bits among the one or more pieces of downlink control information having a number of bits greater than or equal to the second value as the third downlink control information helps to reduce the number of bits of the fourth part, enhance the independent reliability of the fourth part, and facilitate the transmission of the fourth part using scattered physical resources, thereby improving system efficiency.

In some embodiments, the number of bits of the third part is equal to the number of bits of the second downlink control information. For example, if the number of bits of the second downlink control information is L1 (wherein L1 is a positive integer), and the number of bits of the third part is N1, N1 = L1. In this case, for each third part, its number of bits N1 is equal to the number of bits L1 of the second downlink control information.

In some embodiments, the number of bits of the third part is equal to the number of bits of the second downlink control information minus a third value, wherein the third value is specified by a protocol or configured by a network device. For example, if the number of bits of the second downlink control information is L1 and the third value is S1 (wherein L1 is a positive integer and S1 is also a positive integer), the number of bits of the third part is N1, which is equal to (L1-S1). In this case, for each third part, its number of bits N1 is less than the number of bits L1 of the second downlink control information, but each third part is transmitted together with the first information having a number of bits S1. After attaching the first information to each third part, the total number of bits transmitted together is L1. For an introduction to the first information, reference may be made to the following description.

In some embodiments, the number of bits of the fourth part is equal to the number of bits of the third downlink control information. For example, if the number of bits of the third downlink control information is L2 (wherein L2 is a positive integer), and the number of bits of the fourth part is N2, N2 = L2. In this case, for each fourth part, its number of bits N2 is equal to the number of bits L2 of the third downlink control information.

In some embodiments, the number of bits of the fourth part is equal to the number of bits of the third downlink control information minus a fourth value, wherein the fourth value is specified by a protocol or configured by the network device. For example, if the number of bits of the third downlink control information is L2 and the fourth value is S2 (wherein L2 is a positive integer and S2 is also a positive integer), the number of bits of the fourth part is N2, which is equal to (L2-S2). In this case, for each fourth part, its number of bits N2 is less than the number of bits L2 of the third downlink control information, but each fourth part is transmitted together with the first information having a number of bits S2. After attaching the first information to each fourth part, the total number of bits transmitted together is L2. For an introduction to the first information, reference may be made to the following description.

In some embodiments, the network device autonomously determines the segmentation method for the aforementioned data, that is, the network device autonomously determines the total number C of parts included in the data, as well as the number of bits of each part. In the case where the terminal device is configured to monitor at least two types of downlink control information, the number of bits of each part is determined based on the number of bits of one type of the at least two types of downlink control information. Assuming that the number of bits of a certain part among the C parts is determined based on the number of bits of the fourth downlink control information among the at least two types of downlink control information, the number of bits of this part is equal to the number of bits of the fourth downlink control information, or equal to the number of bits of the fourth downlink control information minus a fifth value, wherein the fifth value is specified by a protocol or configured by the network device. The network device may transmit the total number C of parts included in the data to the terminal device via first information (described below). In this way, the segmentation method for the data is transparent to the terminal device, and the implementation of the terminal device is relatively simple.

The first information is introduced and described hereinafter.

For any one of the parts included in the aforementioned data, the first information may be transmitted together with that part. The first information is the information transmitted along with the aforementioned part. For the C parts included in the aforementioned data, the first information may be attached to each part during transmission, or may be attached to only one or more of the parts during transmission. The present disclosure imposes no limitations in this regard.

In some embodiments, the fifth part among the aforementioned C parts is concatenated with the first information and transmitted, wherein the first information is the information transmitted along with the fifth part. Here, the fifth part may be any one of the C parts, and there may be one or a plurality of fifth parts among the C parts. That is, among the aforementioned C parts, each part can have corresponding first information, or only some of the C parts can have corresponding first information while others do not. Additionally, the fifth part here may be any of the first, second, third, and fourth parts introduced above, which is not limited by the present disclosure. The number of bits of the first information may be specified by a protocol or configured by a network device. The first information may also be understood as control information, downlink control information, associated information, or other names, which is not limited by the present disclosure.

In addition, the fifth part mentioned above is transmitted after concatenation with the first information, wherein concatenation may be understood as multiplexing or merging.

In some embodiments, the first information is concatenated before the fifth part. For example, if the number of bits of the fifth part is N and the number of bits of the corresponding first information is S, L = N + S. In this case, among the aforementioned L bits received by the terminal device, the first S bits are the first information and the last N bits are the fifth part. The fifth part may include data information and, optionally, also include padding information.

In some embodiments, the first information includes at least one of the following:
index information, used to determine an index or the numbering of the fifth part;
quantity information, used to determine a total number of parts included in the aforementioned data;
process information, used to determine hybrid automatic repeat request (HARQ) process information of the aforementioned data;
resource information, used to determine a transmission resource for feedback information of the aforementioned data or a transmission resource for feedback information of the fifth part; or
parameter information, used to determine a transmission parameter of another channel for scheduling or indication.

Illustratively, the aforementioned data includes C parts. Assuming that each part has corresponding first information, the first information of the 1^{st} part may include index information with a value of 0, the first information of the 2^{nd} part may include index information with a value of 1, the first information of the 3^{rd} part may include index information with a value of 2, and so on. By including the index information within the first information, the receiving end can arrange, based on the index information, data information of the plurality of parts in order, thereby obtaining complete data.

Illustratively, the aforementioned data includes C parts. Assuming that each part has corresponding first information, the first information for each part may include quantity information with a value of C. By including the quantity information within the first information, the receiving end can be informed of the total number of parts included in the data, and accordingly, it can determine whether it has received all the parts included in the data.

In addition, by including the process information and the resource information in the first information, the receiving end can be informed of the HARQ process information of the aforementioned data and the transmission resources used for transmitting feedback information to the transmitting end, thereby achieving HARQ feedback and enhancing the reliability of data transmission.

In addition, by including the parameter information within the first information, transmission parameters of other channels, such as the time-frequency resources occupied by other channels, can be scheduled or indicated, thus achieving scheduling or indication of other channels.

In some embodiments, the information included in the first information corresponding to different parts varies. Illustratively, the aforementioned data includes C parts. The first information corresponding to the 1^{st} part includes first resource information, which is used to determine the time-domain resource position for transmitting the feedback information of the aforementioned data. The first information corresponding to the 2^{nd} part includes second resource information, which is used to determine the physical channel resource index for transmitting the feedback information of the aforementioned data. The first information corresponding to the 3^{rd} part includes third resource information, which is used to determine the power control information for transmitting the feedback information of the aforementioned data. By varying the information included in the first information corresponding to different parts, the number of bits of the first information included in each part can be compressed as much as possible.

In some embodiments, the aforementioned data corresponds to an HARQ process. That is, when the data includes C parts, these C parts correspond to the same HARQ process.

In some embodiments, the terminal device transmits feedback information corresponding to the aforementioned data. This feedback information is used to indicate the reception status of the aforementioned data.

In some embodiments, the feedback information includes feedback information for each individual part of the data. For example, if the aforementioned data includes three parts, the terminal device transmits feedback information for each of these three parts, with the feedback information for each part being an acknowledgement (ACK) or a negative acknowledgement (NACK). The ACK indicates successful reception, while the NACK indicates reception failure. In this way, ACK/NACK feedback at the granularity of individual parts can be achieved. For a specific part, if the transmitting end receives NACK feedback information corresponding to that part, it may retransmit that part.

In some embodiments, the feedback information is first information or second information. The first information is used to indicate that at least one of parts included in the data fails to be received, and the second information is used to indicate that all of the parts included in the data are successfully received. For example, if the aforementioned data includes three parts, when all of these three parts are successfully received, the terminal device transmits the second information, wherein the second information is ACK feedback information; when at least one part of these three parts fails to be received, the terminal device transmits the first information, wherein the first information is NACK feedback information. This approach eliminates the need to transmit feedback information for each part individually, thereby helping to save the transmission resources required for feedback information.

In some embodiments, each part occupies a first candidate resource for transmission, wherein the terminal device monitors a plurality of candidate resources, including the first candidate resource, and at least one of the plurality of candidate resources is used for transmitting downlink control information.

In some embodiments, a candidate resource includes at least one physical resource unit. The physical resource unit may be a control channel element (CCE), a resource element group (REG), a resource element (RE), etc., which is not limited in the present disclosure. A piece of downlink control information occupies a candidate resource for transmission. The terminal device determines at least one candidate resource to be detected according to a predefined rule. The aforementioned at least one candidate resource is a periodic resource. The transmitting end transmits downlink control information and/or data via some of the plurality of candidate resources as needed. It is also possible that no information is transmitted within a certain period. Through the aforementioned method, the control channel can be multiplexed for data transmission, thereby improving the transmission efficiency of small packet data.

In the technical solution according to the embodiments of the present disclosure, for scenarios where the downlink channel supports carrying both data information and control information (such as scenarios where downlink data is carried in the downlink control channel for transmission), the number of bits of each part of the downlink data is determined based on the number of bits of the downlink control information, causing no new bits to be introduced by the transmitted data. This can avoid an increase in the number of blind detections since the number of blind detections, when performed by the terminal device for the downlink channel (such as the downlink control channel), is proportional to the number of types of information to be detected, wherein different types of information correspond to different numbers of bits.

Please refer to FIG. 10, which illustrates a flowchart of a method for transmitting data according to another embodiment of the present disclosure. This method may be performed by a network device. The method may include the following steps.

In step 1010, the network device transmits data, wherein the data includes C parts, and a number of bits of each of the C parts is determined based on a number of bits of at least one type of downlink control information, C being a positive integer.

In some embodiments, the network device receives feedback information corresponding to the aforementioned data, wherein the feedback information includes feedback information for each part included in the aforementioned data, or the feedback information is first information or second information. The first information is used to indicate that at least one of the parts included in the aforementioned data fails to be received. The second information is used to indicate that all of the parts included in the aforementioned data are successfully received.

For details not elaborated in the method embodiments on the network device side, please refer to the method embodiments on the terminal device side mentioned above. Additionally, the technical effects achieved by the method embodiments on the network device side can also be found in the descriptions of the method embodiments on the terminal device side, as they are similar.

In the technical solution according to the embodiments of the present disclosure, for scenarios where the downlink channel supports carrying both data information and control information (such as scenarios where downlink data is carried in the downlink control channel for transmission), the number of bits of each part of the downlink data is determined based on the number of bits of the downlink control information, causing no new bits to be introduced by the transmitted data. This can avoid an increase in the number of blind detections since the number of blind detections, when performed by the terminal device for the downlink channel (such as the downlink control channel), is proportional to the number of types of information to be detected, wherein different types of information correspond to different numbers of bits.

The following are the embodiments of the apparatus of the present disclosure, which may be used to perform the embodiments of the method of the present disclosure. For details not disclosed in the embodiments of the apparatus of the present disclosure, reference may be made to the embodiments of the method of the present disclosure.

Please refer to FIG. 11, which illustrates a block diagram of an apparatus for transmitting data according to an embodiment of the present disclosure. The apparatus has the functions of implementing the method examples on the terminal device side described above, and the functions may be implemented by hardware or by executing corresponding software on hardware. The apparatus may be the terminal device introduced above, or may be disposed in the terminal device. As shown in FIG. 11, the apparatus 1100 may include a receiving module 1110.

The receiving module 1110 is configured to receive data, wherein the data includes C parts, and a number of bits of each of the C parts is determined based on a number of bits of at least one type of downlink control information, C being a positive integer.

In some embodiments, each of the C parts has a same number of bits equal to N, wherein N is determined based on the number of bits of the at least one type of downlink control information, N being a positive integer.

In some embodiments, the C parts include at least one first part and/or at least one second part; wherein the first part includes N bits of data information; and the second part includes (N-P) bits of data information and P bits of padding information, P being a positive integer less than or equal to N.

In some embodiments, a value of P is equal to (C*N-D), wherein D represents a number of bits of the data.

In some embodiments, a value of P is equal to $\left(N-\left⌈\frac{D}{C}\right⌉\right)$ or $\left(N-\left⌊\frac{D}{C}\right⌋\right)$ wherein D represents a number of bits of the data.

In some embodiments, the C parts include mod(D,C) first-type second parts, wherein the value of P corresponding to the first-type second part is equal to $\left(N-\left⌈\frac{D}{C}\right⌉\right)$; and/or the C parts include (C-mod(D,C)) second-type second parts, wherein the value of P corresponding to the second-type second part is equal to $\left(N-\left⌊\frac{D}{C}\right⌋\right)$.

In some embodiments, the at least one type of downlink control information includes first downlink control information, wherein the first downlink control information is one of M types of downlink control information that are pre-configured, M being a positive integer.

In some embodiments, the first downlink control information is: downlink control information with a largest number of bits among the M types of downlink control information; or downlink control information with a smallest number of bits among the M types of downlink control information; or configured by a network device.

In some embodiments, N is equal to a number of bits of the first downlink control information; or N is equal to a number of bits of the first downlink control information minus a first value, wherein the first value is specified by a protocol or configured by a network device.

In some embodiments, a value of C is determined based on a value of N; or a value of C is configured by a network device.

In some embodiments, the C parts comprise at least one third part and at least one fourth part, wherein a number of bits of the third part is different from a number of bits of the fourth part.

In some embodiments, the at least one type of downlink control information includes second downlink control information and third downlink control information, the second downlink control information and the third downlink control information being two different types of downlink control information configured for the terminal device to monitor; wherein the number of bits of the third part is determined based on a number of bits of the second downlink control information; and the number of bits of the fourth part is determined based on a number of bits of the third downlink control information.

In some embodiments, the terminal device is configured to monitor K types of downlink control information, K being an integer greater than or equal to 2, wherein the second downlink control information is downlink control information with a largest number of bits among the K types of downlink control information or configured by a network device.

In some embodiments, the terminal device is configured to monitor K types of downlink control information, K being an integer greater than or equal to 2, wherein the third downlink control information is downlink control information with a smallest number of bits among one or more pieces of downlink control information, of the K types of downlink control information, that have a number of bits greater than or equal to a second value, the second value being equal to (D-(C-1)×N1), wherein D represents a number of bits of the data, and N1 is determined based on the number of bits of the second downlink control information.

In some embodiments, the number of bits of the third part is determined based on the number of bits of the second downlink control information, including: the number of bits of the third part is equal to the number of bits of the second downlink control information; or the number of bits of the third part is equal to the number of bits of the second downlink control information minus a third value, wherein the third value is specified by a protocol or configured by a network device.

In some embodiments, the number of bits of the fourth part is determined based on the number of bits of the third downlink control information, including: the number of bits of the fourth part is equal to the number of bits of the third downlink control information; or the number of bits of the fourth part is equal to the number of bits of the third downlink control information minus a fourth value, wherein the fourth value is specified by a protocol or configured by a network device.

In some embodiments, a value of C is determined based on the number of bits of the second downlink control information; or a value of C is configured by a network device.

In some embodiments, a number of the at least one third part is (C-1), and a number of the at least one fourth part is 1.

In some embodiments, each of the C parts occupies a first candidate resource for transmission, wherein the terminal device monitors a plurality of candidate resources, the plurality of candidate resources include the first candidate resource, and at least one of the plurality of candidate resources is used for transmitting the downlink control information.

In some embodiments, a fifth part of the C parts is transmitted after concatenation with first information, the first information being transmitted along with the fifth part.

In some embodiments, the first information comprises at least one of:
index information, used to determine an index of the fifth part;
quantity information, used to determine a total number of parts included in the data;
process information, used to determine HARQ process information of the data;
resource information, used to determine a transmission resource for feedback information of the data or a transmission resource for feedback information of the fifth part; or
parameter information, used to determine a transmission parameter of another channel for scheduling or indication.

In some embodiments, the first information is concatenated before the fifth part.

In some embodiments, information included in the first information corresponding to different parts is different.

In some embodiments, the apparatus 1100 further includes a transmitting module 1120, configured to transmit feedback information corresponding to the data; wherein the feedback information includes feedback information for each of the C parts included in the data; or the feedback information is first information or second information, wherein the first information is used to indicate that at least one of the C parts included in the data fails to be received, and the second information is used to indicate that all of the C parts included in the data are successfully received.

In some embodiments, the data is carried in a control channel for transmission, the control channel being used for transmitting the at least one type of downlink control information.

In some embodiments, a number of bits of the data allowed to be carried in the control channel for transmission is less than or equal to a first threshold, wherein the first threshold is specified by a protocol, configured by a network device, or associated with a capability of the terminal device; or a total number of parts included in the data allowed to be carried in the control channel for transmission is less than or equal to a second threshold, wherein the second threshold is specified by a protocol, configured by a network device, or associated with a capability of the terminal device.

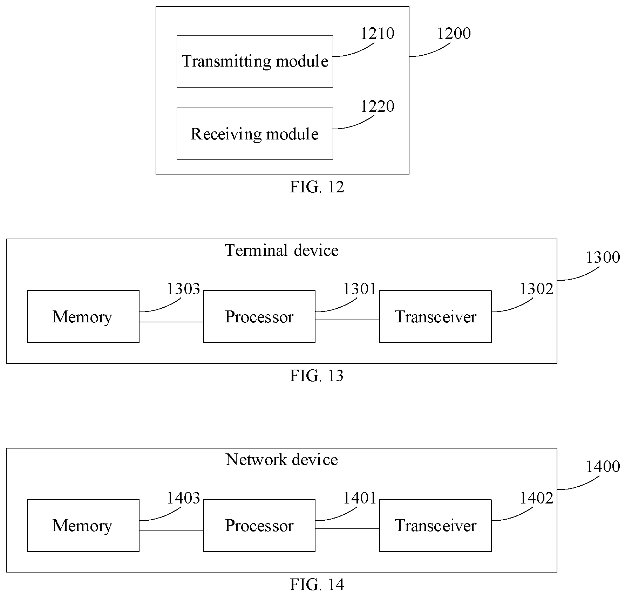

Please refer to FIG. 12, which illustrates a block diagram of an apparatus for transmitting data according to another embodiment of the present disclosure. The apparatus has the functions of implementing the method examples on the network device side described above, and the functions may be implemented by hardware or by executing corresponding software on hardware. The apparatus may be the network device introduced above, or may be disposed in the network device. As shown in FIG. 12, the apparatus 1200 may include: a transmitting module 1210.

The transmitting module 1210 is configured to transmit data, wherein the data includes C parts, and a number of bits of each of the C parts is determined based on a number of bits of at least one type of downlink control information, C being a positive integer.

In some embodiments, each of the C parts has a same number of bits equal to N, wherein N is determined based on the number of bits of the at least one type of downlink control information, N being a positive integer.

In some embodiments, the C parts include at least one first part and/or at least one second part; wherein the first part includes N bits of data information; and the second part includes (N-P) bits of data information and P bits of padding information, P being a positive integer less than or equal to N.

In some embodiments, a value of P is equal to (C*N-D), wherein D represents a number of bits of the data.

In some embodiments, a value of P is equal to $\left(N-\left⌈\frac{D}{C}\right⌉\right)$ or $\left(N-\left⌊\frac{D}{C}\right⌋\right)$ wherein D represents a number of bits of the data.

In some embodiments, the C parts include mod(D,C) first-type second parts, wherein the value of P corresponding to the first-type second part is equal to $\left(N-\left⌈\frac{D}{C}\right⌉\right)$; and/or the C parts comprise (C-mod(D,C)) second-type second parts, wherein the value of P corresponding to the second-type second part is equal to $\left(N-\left⌊\frac{D}{C}\right⌋\right)$.

In some embodiments, the at least one type of downlink control information includes first downlink control information, wherein the first downlink control information is one of M types of downlink control information that are pre-configured, M being a positive integer.

In some embodiments, the first downlink control information is: downlink control information with a largest number of bits among the M types of downlink control information; or downlink control information with a smallest number of bits among the M types of downlink control information; or configured by the network device.

In some embodiments, N is equal to a number of bits of the first downlink control information; or N is equal to a number of bits of the first downlink control information minus a first value, wherein the first value is specified by a protocol or configured by the network device.

In some embodiments, a value of C is determined based on a value of N; or a value of C is configured by the network device.

In some embodiments, the C parts include at least one third part and at least one fourth part, wherein a number of bits of the third part is different from a number of bits of the fourth part.

In some embodiments, the at least one type of downlink control information includes second downlink control information and third downlink control information, the second downlink control information and the third downlink control information being two different types of downlink control information configured for a terminal device to monitor; wherein the number of bits of the third part is determined based on a number of bits of the second downlink control information; and the number of bits of the fourth part is determined based on a number of bits of the third downlink control information.

In some embodiments, the terminal device is configured to monitor K types of downlink control information, K being an integer greater than or equal to 2, wherein the second downlink control information is downlink control information with a largest number of bits among the K types of downlink control information or configured by the network device.

In some embodiments, the terminal device is configured to monitor K types of downlink control information, K being an integer greater than or equal to 2, wherein the third downlink control information is downlink control information with a smallest number of bits among one or more pieces of downlink control information, of the K types of downlink control information, that have a number of bits greater than or equal to a second value, the second value being equal to (D-(C-1)×N1), wherein D represents a number of bits of the data, and N1 is determined based on the number of bits of the second downlink control information.

In some embodiments, the number of bits of the third part is determined based on the number of bits of the second downlink control information, including: the number of bits of the third part is equal to the number of bits of the second downlink control information; or the number of bits of the third part is equal to the number of bits of the second downlink control information minus a third value, wherein the third value is specified by a protocol or configured by the network device.

In some embodiments, the number of bits of the fourth part is determined based on the number of bits of the third downlink control information, including: the number of bits of the fourth part is equal to the number of bits of the third downlink control information; or the number of bits of the fourth part is equal to the number of bits of the third downlink control information minus a fourth value, wherein the fourth value is specified by a protocol or configured by the network device.

In some embodiments, a value of C is determined based on the number of bits of the second downlink control information; or a value of C is configured by the network device.

In some embodiments, a number of the at least one third part is (C-1), and a number of the at least one fourth part is 1.

In some embodiments, each of the C parts occupies a first candidate resource for transmission, wherein a terminal device monitors a plurality of candidate resources, the plurality of candidate resources comprise the first candidate resource, and at least one of the plurality of candidate resources is used for transmitting the downlink control information.

In some embodiments, a fifth part of the C parts is transmitted after concatenation with first information, the first information being transmitted along with the fifth part.

In some embodiments, the first information includes at least one of:
index information, used to determine an index of the fifth part;
quantity information, used to determine a total number of parts included in the data;
process information, used to determine HARQ process information of the data;
resource information, used to determine a transmission resource for feedback information of the data or a transmission resource for feedback information of the fifth part; or
parameter information, used to determine a transmission parameter of another channel for scheduling or indication.

In some embodiments, the first information is concatenated before the fifth part.

In some embodiments, information included in the first information corresponding to different parts is different.

In some embodiments, the apparatus 1200 further includes a receiving module 1220, configured to receive feedback information corresponding to the data; wherein the feedback information includes feedback information for each of the C parts included in the data; or the feedback information is first information or second information, wherein the first information is used to indicate that at least one of the C parts included in the data fails to be received, and the second information is used to indicate that all of the C parts included in the data are successfully received.

In some embodiments, the data is carried in a control channel for transmission, the control channel being used for transmitting the at least one type of downlink control information.

In some embodiments, a number of bits of the data allowed to be carried in the control channel for transmission is less than or equal to a first threshold, wherein the first threshold is specified by a protocol, configured by the network device, or associated with capabilities of a terminal device; or a total number of parts included in the data allowed to be carried in the control channel for transmission is less than or equal to a second threshold, wherein the second threshold is specified by a protocol, configured by the network device, or associated with capabilities of a terminal device.

It should be noted that when the apparatus according to the above embodiments implements its functions, the division of the functional modules mentioned above is used only as an example for illustration. In practical applications, the above functions may be allocated to different functional modules according to actual needs, that is, the internal structure of the device may be divided into different functional modules to complete all or part of the functions described above.

Regarding the apparatus in the aforementioned embodiments, the specific ways in which each module performs operations have already been described in detail in the embodiments related to the method, and are not elaborated on here.

Please refer to FIG. 13, which illustrates a structural schematic diagram of a terminal device 1300 according to an embodiment of the present disclosure. This terminal device 1300 may be used to perform the method steps executed by the terminal device in the above embodiments. The terminal device 1300 may include: a processor 1301, a transceiver 1302, and a memory 1303. The transceiver 1302 is configured to implement transmitting or receiving functions, such as implementing the functions of the aforementioned receiving module 1110 and/or transmitting module 1120. The processor 1301 may be configured to implement other processing functions or control transmitting and/or receiving.

The processor 1301 includes one or more processing cores, and executes various functional applications and information processing by running software programs and modules.

The transceiver 1302 may include a receiver and a transmitter, for example, which may be implemented as a single wireless communication component. This wireless communication component may include a wireless communication chip and a radio frequency (RF) antenna.

The memory 1303 may be connected to the processor 1301 and the transceiver 1302.

The memory 1303 may be configured to store the computer program executable by the processor, and the processor 1301 is configured to execute the computer program to implement the steps performed by the terminal device in the above method embodiments.

In addition, the memory 1303 may be implemented by any type of a volatile or non-volatile storage device or a combination thereof, including but not limited to: a magnetic or optical disk, an electrically-erasable programmable read-only memory (EEPROM), an erasable programmable read-only memory (EPROM), a static random-access memory (SRAM), a read-only memory (ROM), a magnetic memory, a flash memory, and a programmable ROM (PROM).

In some embodiments, the transceiver 1302 is configured to receive data, wherein the data includes C parts, and a number of bits of each of the C parts is determined based on a number of bits of at least one type of downlink control information, C being a positive integer.

For details not elaborated in the above embodiments, reference may be made to the descriptions in the method embodiments mentioned above, and no further elaboration is provided here.

Please refer to FIG. 14, which illustrates the structural schematic diagram of a network device 1400 according to an embodiment of the present disclosure. This network device 1400 may be used to perform the method steps performed by the network device in the aforementioned embodiments. The network device 1400 may include: a processor 1401, a transceiver 1402, and a memory 1403. Specifically, the transceiver 1402 is configured to implement transmitting or receiving functions, such as the functions of the aforementioned transmitting module 1210 and/or receiving module 1220. The processor 1401 may be configured to implement other processing functions or to control transmitting and/or receiving.

The processor 1401 includes one or more processing cores, and executes various functional applications and information processing by running software programs and modules.

The transceiver 1402 may include a receiver and a transmitter. For instance, the transceiver 1402 may include a wired communication component, which may include a wired communication chip and a wired interface (such as a fiber optic interface). Optionally, the transceiver 1402 may also include a wireless communication component, which may include a wireless communication chip and an RF antenna.

The memory 1403 may be connected to the processor 1401 and the transceiver 1402.

The memory 1403 may be configured to store the computer program executable by the processor, and the processor 1401 is configured to execute the computer program to implement the steps performed by the network device in the above method embodiments.

In addition, the memory 1403 may be implemented by any type of a volatile or non-volatile storage device, or a combination thereof. The volatile or non-volatile storage device includes, but is not limited to: a magnetic or optical disk, an EEPROM, an EPROM, an SRAM, an ROM, a magnetic memory, a flash memory, and a PROM.

In some embodiments, the transceiver 1402 is configured to transmit data, wherein the data includes C parts, and a number of bits of each of the C parts is determined based on a number of bits of at least one type of downlink control information, C being a positive integer.

For details not elaborated in these embodiments, reference may be made to the foregoing embodiments, and no further elaboration is provided here.

The embodiments of the present disclosure further provide a computer-readable storage medium, in which a computer program is stored. The computer program, when executed by a processor of a terminal device, causes the terminal device to perform the method for transmitting data on the terminal device side as described above.

The embodiments of the present disclosure further provide a computer-readable storage medium, in which a computer program is stored. The computer program, when executed by a processor of a network device, causes the network device to perform the method for transmitting data on the network device side as described above.

In some embodiments, the computer-readable storage medium may include: an ROM, a random-access memory (RAM), a solid state drive (SSD), or an optical disk, etc. Among them, the RAM may include a resistance RAM (ReRAM) and a dynamic RAM (DRAM).

The embodiments of the present disclosure further provide a chip, which includes a programmable logic circuit and/or one or more program instructions. The chip, when running on a terminal device, causes the terminal device to perform the aforementioned method for transmitting data on the terminal device side.

The embodiments of the present disclosure further provide a chip, which includes a programmable logic circuit and/or one or more program instructions. The chip, when running on a network device, causes the network device to perform the aforementioned method for transmitting data on the network device side.

The embodiments of the present disclosure further provide a computer program product or computer program, which includes one or more computer instructions stored in a computer-readable storage medium. The one or more computer instructions, when read from computer-readable storage medium and executed by a processor of a terminal device, cause the terminal device to perform the method for transmitting data on the terminal device side as described above.

The embodiments of the present disclosure further provide a computer program product or computer program, which includes one or more computer instructions stored in a computer-readable storage medium. The one or more computer instructions, when read from the computer-readable storage medium and executed by a processor of a network device, cause the network device to perform the aforementioned method for transmitting data on the network device side.

It should be understood that the term "indication" mentioned in the embodiments of the present disclosure may be a direct indication, an indirect indication, or an indication that an association relationship is present. For example, "A indicates B" may mean that A directly indicates B, for example, B may be obtained through A; or may mean that A indirectly indicates B, for example, A indicates C through which B may be obtained; or may mean an association relationship is present between A and B.

In the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

In some embodiments of the present disclosure, a "predefined" operation may be performed by pre-storing corresponding codes or tables in a device (e.g., a device including a terminal device and a network device), or may be performed by other means that may be used to indicate relevant information. The present disclosure does not impose any limitations on specific methods for performing the predefined operation. For example, the predefined operation may be specified in a protocol.

In some embodiments of the present disclosure, the "protocol" may refer to a standard protocol in the communication field. For example, the protocol may include an LTE protocol, an NR protocol, and related protocols applied in future communication systems, which is not limited in the present disclosure.

The term "a plurality of" herein means two or more. The term "and/or" describes an association relationship of associated objects, and it indicates three types of relationships. For example, the phrase "A and/or B" means (A), (B), or (A and B). The character "/" usually indicates an "or" relationship between the associated objects.

In addition, the serial numbers of the processes described herein only exemplifies one possible execution sequence among the processes. In some other embodiments, the above processes may also be executed without following the numbering sequence. For example, two processes with different serial numbers are executed simultaneously or in an order reverse to the order shown in the figures. This is not limited in the embodiments of the present disclosure.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the concept and principle of the present disclosure should fall within the protection scope of the present disclosure.

## Claims

1. A method for transmitting data, performed by a terminal device, the method comprising:
receiving data, wherein the data comprises C parts, and a number of bits of each of the C parts is determined based on a number of bits of at least one type of downlink control information, C being a positive integer.

2. The method according to claim 1, wherein each of the C parts has a same number of bits equal to N, wherein N is determined based on the number of bits of the at least one type of downlink control information, N being a positive integer.

3. The method according to claim 2, wherein the C parts comprise at least one first part and/or at least one second part; wherein
the first part comprises N bits of data information; and
the second part comprises (N-P) bits of data information and P bits of padding information, P being a positive integer less than or equal to N.

4. The method according to claim 3, wherein a value of P is equal to (C*N-D), wherein D represents a number of bits of the data.

5. The method according to claim 3, wherein a value of P is equal to $\left(N-\left⌈\frac{D}{C}\right⌉\right)$ or $\left(N-\left⌊\frac{D}{C}\right⌋\right)$, wherein D represents a number of bits of the data.

6. The method according to claim 5, wherein
the C parts comprise mod(D,C) first-type second parts, wherein the value of P corresponding to
the first-type second part is equal to $\left(N-\left⌈\frac{D}{C}\right⌉\right)$; and/or
the C parts comprise (C - mod(D,C)) second-type second parts, wherein the value of P
corresponding to the second-type second part is equal to $\left(N-\left⌊\frac{D}{C}\right⌋\right)$.

7. The method according to any one of claims 2 to 6, wherein the at least one type of downlink control information comprises first downlink control information, wherein the first downlink control information is one of M types of downlink control information that are pre-configured, M being a positive integer.

8. The method according to claim 7, wherein the first downlink control information is:
downlink control information with a largest number of bits among the M types of downlink control information; or
downlink control information with a smallest number of bits among the M types of downlink control information; or
configured by a network device.

9. The method according to claim 7 or 8, wherein
N is equal to a number of bits of the first downlink control information; or
N is equal to a number of bits of the first downlink control information minus a first value, wherein the first value is specified by a protocol or configured by a network device.

10. The method according to any one of claims 2 to 9, wherein
a value of C is determined based on a value of N; or
a value of C is configured by a network device.

11. The method according to claim 1, wherein the C parts comprise at least one third part and at least one fourth part, wherein a number of bits of the third part is different from a number of bits of the fourth part.

12. The method according to claim 11, wherein the at least one type of downlink control information comprises second downlink control information and third downlink control information, the second downlink control information and the third downlink control information being two different types of downlink control information configured for the terminal device to monitor; wherein
the number of bits of the third part is determined based on a number of bits of the second downlink control information; and
the number of bits of the fourth part is determined based on a number of bits of the third downlink control information.

13. The method according to claim 12, wherein the terminal device is configured to monitor K types of downlink control information, K being an integer greater than or equal to 2, wherein the second downlink control information is downlink control information with a largest number of bits among the K types of downlink control information or configured by a network device.

14. The method according to claim 12, wherein the terminal device is configured to monitor K types of downlink control information, K being an integer greater than or equal to 2, wherein the third downlink control information is downlink control information with a smallest number of bits among one or more pieces of downlink control information, of the K types of downlink control information, which have a number of bits greater than or equal to a second value, the second value being equal to (D-(C-1)×N1), wherein D represents a number of bits of the data, and N1 is determined based on the number of bits of the second downlink control information.

15. The method according to any one of claims 12 to 14, wherein the number of bits of the third part is determined based on the number of bits of the second downlink control information, comprising:
the number of bits of the third part is equal to the number of bits of the second downlink control information; or
the number of bits of the third part is equal to the number of bits of the second downlink control information minus a third value, wherein the third value is specified by a protocol or configured by a network device.

16. The method according to any one of claims 12 to 15, wherein the number of bits of the fourth part is determined based on the number of bits of the third downlink control information, comprising:
the number of bits of the fourth part is equal to the number of bits of the third downlink control information; or
the number of bits of the fourth part is equal to the number of bits of the third downlink control information minus a fourth value, wherein the fourth value is specified by a protocol or configured by a network device.

17. The method according to any one of claims 12 to 16, wherein
a value of C is determined based on the number of bits of the second downlink control information; or
a value of C is configured by a network device.

18. The method according to any one of claims 11 to 17, wherein a number of the at least one third part is (C-1), and a number of the at least one fourth part is 1.

19. The method according to any one of claims 1 to 18, wherein each of the C parts occupies a first candidate resource for transmission, wherein the terminal device monitors a plurality of candidate resources, the plurality of candidate resources comprise the first candidate resource, and at least one of the plurality of candidate resources is used for transmitting the downlink control information.

20. The method according to any one of claims 1 to 19, wherein a fifth part of the C parts is transmitted after concatenation with first information, the first information being transmitted along with the fifth part.

21. The method according to claim 20, wherein the first information comprises at least one of:
index information, used to determine an index of the fifth part;
quantity information, used to determine a total number of parts included in the data;
process information, used to determine hybrid automatic repeat request (HARQ) process information of the data;
resource information, used to determine a transmission resource for feedback information of the data or a transmission resource for feedback information of the fifth part; or
parameter information, used to determine a transmission parameter of another channel for scheduling or indication.

22. The method according to claim 20 or 21, wherein the first information is concatenated before the fifth part.

23. The method according to any one of claims 20 to 22, wherein information included in the first information corresponding to different parts is different.

24. The method according to any one of claims 1 to 23, further comprising:
transmitting feedback information corresponding to the data; wherein
the feedback information comprises feedback information for each of the C parts included in the data; or
the feedback information is first information or second information, wherein the first information is used to indicate that at least one of the C parts included in the data fails to be received, and the second information is used to indicate that all of the C parts included in the data are successfully received.

25. The method according to any one of claims 1 to 24, wherein the data is carried in a control channel for transmission, the control channel being used for transmitting the at least one type of downlink control information.

26. The method according to claim 25, wherein
a number of bits of the data allowed to be carried in the control channel for transmission is less than or equal to a first threshold, wherein the first threshold is specified by a protocol, configured by a network device, or associated with a capability of the terminal device; or
a total number of parts included in the data allowed to be carried in the control channel for transmission is less than or equal to a second threshold, wherein the second threshold is specified by a protocol, configured by a network device, or associated with a capability of the terminal device.

27. A method for transmitting data, performed by a network device, the method comprising:
transmitting data, wherein the data comprises C parts, and a number of bits of each of the C parts is determined based on a number of bits of at least one type of downlink control information, C being a positive integer.

28. The method according to claim 27, wherein each of the C parts has a same number of bits equal to N, wherein N is determined based on the number of bits of the at least one type of downlink control information, N being a positive integer.

29. The method according to claim 28, wherein the C parts comprise at least one first part and/or at least one second part; wherein
the first part comprises N bits of data information; and
the second part comprises (N-P) bits of data information and P bits of padding information, P being a positive integer less than or equal to N.

30. The method according to claim 29, wherein a value of P is equal to (C*N-D), wherein D represents a number of bits of the data.

31. The method according to claim 29, wherein a value of P is equal to $\left(N-\left⌈\frac{D}{C}\right⌉\right)$ or $\left(N-\left⌊\frac{D}{C}\right⌋\right)$, wherein D represents a number of bits of the data.

32. The method according to claim 31, wherein
the C parts comprise mod(D,C) first-type second parts, wherein the value of P corresponding to
the first-type second part is equal to $\left(N-\left⌈\frac{D}{C}\right⌉\right)$; and/or
the C parts comprise (C - mod(D,C)) second-type second parts, wherein the value of P
corresponding to the second-type second part is equal to $\left(N-\left⌊\frac{D}{C}\right⌋\right)$.

33. The method according to any one of claims 28 to 32, wherein the at least one type of downlink control information comprises first downlink control information, wherein the first downlink control information is one of M types of downlink control information that are pre-configured, M being a positive integer.

34. The method according to claim 33, wherein the first downlink control information is:
downlink control information with a largest number of bits among the M types of downlink control information; or
downlink control information with a smallest number of bits among the M types of downlink control information; or
configured by the network device.

35. The method according to claim 33 or 34, wherein
N is equal to a number of bits of the first downlink control information; or
N is equal to a number of bits of the first downlink control information minus a first value, wherein the first value is specified by a protocol or configured by the network device.

36. The method according to any one of claims 28 to 35, wherein
a value of C is determined based on a value of N; or
a value of C is configured by the network device.

37. The method according to claim 27, wherein the C parts comprise at least one third part and at least one fourth part, wherein a number of bits of the third part is different from a number of bits of the fourth part.

38. The method according to claim 37, wherein the at least one type of downlink control information comprises second downlink control information and third downlink control information, the second downlink control information and the third downlink control information being two different types of downlink control information configured for a terminal device to monitor; wherein
the number of bits of the third part is determined based on a number of bits of the second downlink control information; and
the number of bits of the fourth part is determined based on a number of bits of the third downlink control information.

39. The method according to claim 38, wherein the terminal device is configured to monitor K types of downlink control information, K being an integer greater than or equal to 2, wherein the second downlink control information is downlink control information with a largest number of bits among the K types of downlink control information or configured by the network device.

40. The method according to claim 38, wherein the terminal device is configured to monitor K types of downlink control information, K being an integer greater than or equal to 2, wherein the third downlink control information is downlink control information with a smallest number of bits among one or more pieces of downlink control information, of the K types of downlink control information, which have a number of bits greater than or equal to a second value, the second value being equal to (D-(C-1)×N1), wherein D represents a number of bits of the data, and N1 is determined based on the number of bits of the second downlink control information.

41. The method according to any one of claims 38 to 40, wherein the number of bits of the third part is determined based on the number of bits of the second downlink control information, comprising:
the number of bits of the third part is equal to the number of bits of the second downlink control information; or
the number of bits of the third part is equal to the number of bits of the second downlink control information minus a third value, wherein the third value is specified by a protocol or configured by the network device.

42. The method according to any one of claims 38 to 41, wherein the number of bits of the fourth part is determined based on the number of bits of the third downlink control information, comprising:
the number of bits of the fourth part is equal to the number of bits of the third downlink control information; or
the number of bits of the fourth part is equal to the number of bits of the third downlink control information minus a fourth value, wherein the fourth value is specified by a protocol or configured by the network device.

43. The method according to any one of claims 38 to 42, wherein
a value of C is determined based on the number of bits of the second downlink control information; or
a value of C is configured by the network device.

44. The method according to any one of claims 37 to 43, wherein a number of the at least one third part is (C-1), and a number of the at least one fourth part is 1.

45. The method according to any one of claims 27 to 44, wherein each of the C parts occupies a first candidate resource for transmission, wherein a terminal device monitors a plurality of candidate resources, the plurality of candidate resources comprise the first candidate resource, and at least one of the plurality of candidate resources is used for transmitting the downlink control information.

46. The method according to any one of claims 27 to 45, wherein a fifth part of the C parts is transmitted after concatenation with first information, the first information being transmitted along with the fifth part.

47. The method according to claim 46, wherein the first information comprises at least one of:
index information, used to determine an index of the fifth part;
quantity information, used to determine a total number of parts included in the data;
process information, used to determine hybrid automatic repeat request (HARQ) process information of the data;
resource information, used to determine a transmission resource for feedback information of the data or a transmission resource for feedback information of the fifth part; or
parameter information, used to determine a transmission parameter of another channel for scheduling or indication.

48. The method according to claim 46 or 47, wherein the first information is concatenated before the fifth part.

49. The method according to any one of claims 46 to 48, wherein information included in the first information corresponding to different parts is different.

50. The method according to any one of claims 27 to 49, further comprising:
receiving feedback information corresponding to the data; wherein
the feedback information comprises feedback information for each of the C parts included in the data; or
the feedback information is first information or second information, wherein the first information is used to indicate that at least one of the C parts included in the data fails to be received, and the second information is used to indicate that all of the C parts included in the data are successfully received.

51. The method according to any one of claims 27 to 50, wherein the data is carried in a control channel for transmission, the control channel being used for transmitting the at least one type of downlink control information.

52. The method according to claim 51, wherein,
a number of bits of the data allowed to be carried in the control channel for transmission is less than or equal to a first threshold, wherein the first threshold is specified by a protocol, configured by the network device, or associated with a capability of a terminal device; or
a total number of parts included in the data allowed to be carried in the control channel for transmission is less than or equal to a second threshold, wherein the second threshold is specified by a protocol, configured by the network device, or associated with a capability of a terminal device.

53. An apparatus for transmitting data, comprising:
a receiving module, configured to receive data, wherein the data comprises C parts, and a number of bits of each of the C parts is determined based on a number of bits of at least one type of downlink control information, C being a positive integer.

54. An apparatus for transmitting data, comprising:
a transmitting module, configured to transmit data, wherein the data comprises C parts, and a number of bits of each of the C parts is determined based on a number of bits of at least one type of downlink control information, C being a positive integer.

55. A communication device, comprising a processor and a memory, wherein the memory stores a computer program that, when executed by the processor, causes the processor to perform the method as defined in any one of claims 1 to 26, or the method as defined in any one of claims 27 to 52.

56. A computer-readable storage medium, storing a computer program that, when executed by a processor, causes the processor to perform the method as defined in any one of claims 1 to 26, or the method as defined in any one of claims 27 to 52.

57. A chip, comprising a programmable logic circuit and/or one or more program instructions, wherein the chip, when running, is configured to perform the method as defined in any one of claims 1 to 26, or the method as defined in any one of claims 27 to 52.

58. A computer program product, comprising one or more computer instructions stored in a computer-readable storage medium, wherein the one or more computer instructions, when read from the computer-readable storage medium and executed by a processor, cause the processor to perform the method as defined any one of claims 1 to 26, or the method as defined in any one of claims 27 to 52.
